# EUROPÄISCHE PATENTANMELDUNG

(11) **EP 3 438 058 A1**
(43) Veröffentlichungstag der Anmeldung: **06.02.2019**
(21) Anmeldenummer: 18000653.8
(22) Anmeldetag: 06.08.2018
(51) Int. Cl.: C02F 1/467, C02F 1/72, C02F 1/461, C02F 101/30

(54) **VERFAHREN ZUR ENTFERNUNG VON ORGANISCHEN VERBINDUNGEN AUS BIOLOGISCH GEKLÄRTEM, VORFILTRIERTEM ABWASSER**

(30) Priorität: 05.08.2017 DE 102017007440
(71) Anmelder: Pautz, Norbert, 4125 Riehen (CH)
(72) Erfinder: Pautz, Norbert, 4125 Riehen (CH)

(57) **Zusammenfassung**

Ein Verfahren zur Entfernung von organischen (Mikro-) Verunreinigungen aus vorgereinigtem Abwasser, insbesondere biologisch geklärtem, vorfiltriertem Abwasser mittels Sauerstoff-Radikal-Spezies, umfasst: Initiieren der Bildung verschiedener Sauerstoff-Radikal-Spezies durch Elektrolyse in dem Abwasser mittels einer mit dem Abwasser beaufschlagten, metallischen Elektrode; und Abbauen von organischen Verbindungen der (Mikro-)Verunreinigungen durch Reaktionen mit den Sauerstoff-Radikal-Spezies; dadurch gekennzeichnet, dass zum Erzeugen der Sauerstoff-Radikal-Spezies eine Vor-Anreicherung des geklärten, vorgereinigten Abwassers, insbesondere des vorfiltrierten Abwassers mit reinem Sauerstoff erfolgt.

## Beschreibung

Die vorliegende Erfindung betrifft ein Verfahren zur Entfernung von organischen Verbindungen, beispielweise Mikroverunreinigungen, aus biologisch geklärtem, vorfiltriertem Abwasser.

Beim Stand der Technik werden zur Entfernung von Mikroverunreinigungen als Referenzverfahren Ozon und Aktivkohle eingesetzt.

Die Offenlegungsschrift DE 10 2015 006 706 A1 offenbart zu diesem Zweck eine Elektrokoagulation, wozu eine Opferanode z.B. aus Eisen, elektrolytisch zum Eisenhydroxid gewandelt wird, wobei als Nebenreaktion Hydroxylradikale gebildet werden, jedoch mit geringer Ausbeute. Weiter wurde diese Verfahrensstufe vorgeschlagen, um Radikalfänger weitgehend zu entfernen. Dieses Verfahren ist zwar grundsätzlich geeignet, um Mikroverunreinigungen aus biologisch geklärtem Abwasser zu entfernen, weist aber noch Nachteile auf.

Ein Metallhydroxid-Niederschlag muss im oben genannten Verfahren entfernt werden, welches apparativen, verfahrenstechnischen Aufwand bedeutet. Die Aus-beute an Hydroxyl-Radikalen ist geringer, da die Primär-Reaktion eine Fällungsreaktion ist, welches sich in der längeren Reaktionszeit und somit zu einem Einsatz von mehreren Reaktoren, die hintereinander geschaltet eine CSB-Wert-Absenkung bewirken, darstellt. Die als alternativ dargestellte Addition von Ultraschall ist apparativ zu teuer und bewirkt auch nur geringere Steigerungen der Hydroxylradikal-Ausbeute.

Eine weitere Ausgestaltung gemäß Offenlegungsschrift DE 10 2015 006 706 A1 sieht nach dem Elektrokoagulationsschritt den Einsatz einer mit 50 Hz Wechselspannung versorgten Gitter-Edelstahlelektrode unter 10 minütiger nachgeschalteter Belüftung vor, wobei eine nachgeschaltete, elektrolytische Komponente im Reaktor mit DSA-Elektroden eine Erzeugung von Sauerstoff ermöglicht. Jedoch erweist sich eine nachgeschaltete Zufuhr von Luft oder elektrolytisch erzeugtem Sauerstoff nachteilig, da die Ausbeute gering ist, so dass der Einsatz der teuren DSA-Elektroden unwirtschaftlich ist.

Im Ergebnis ist das Verfahren gemäß DE 10 2015 006 706 unwirtschaftlich und uneffektiv, da zuerst eine Elektrokoagulation mit drei unterschiedlichen Opferanoden durchgeführt werden muss, wobei im Abgang Luft eingeleitet wurde. Die nachträgliche Einleitung von Luft nach dem Reaktor wurde primär durchgeführt, um eine Verbesserung der Koagulation zu erreichen, sekundär um Eisen-II- zu Eisen-III- zu oxidieren und erst im letzten kleineren Schritt, um gegebenenfalls leicht oxidierbare organische Verbindungen zu oxidieren, welches sich hier aber als uneffektiv herausstellte, da kein Überschuss von Sauerstoff vorhanden war.

Da Sauerstoff gemäß DE 10 2015 006 706 A1 erst nach einer elektrolytischen Behandlung eingesetzt wird, kommt es nicht zu einer hinreichenden Bildung von reaktiven Sauerstoff-Spezies, da es im dort beschriebenen Verfahren primär um eine Koagulation geht. Die in DE 10 2015 006 706 A1 geschilderte Bildung vom Sauerstoff-Anion-Radikal hat sich unter den beschriebenen Bedingungen nicht bestätigt.

Die in DE 10 2015 006 706 A1 offenbarte Sauerstoff-Generation über teure DSA-Elektroden, anstelle der Einleitung von Luft hat eine geringe Ausbeute an Sauerstoff, die auf keinen Fall 8 mg/l oder gar mehr erreicht. Hier sind die Bedingungen nicht gegeben, um reaktive Sauerstoff-Spezies in Quantität und Qualität zu bilden, die in eine Reaktion eintreten können. Damit sind die Betriebskosten und die Investitionskosten zu hoch, da drei Verfahrensschritte durchgeführt werden müssen.

Weiterhin wird durch die in DE 10 2015 006 706 A1 beschriebene mehrfache Einleitung von Luft mit CO₂ der Anteil an Radikalfängern pH-abhängig in Form von Karbonat- / Hydrogenkarbonat erhöht. Das ist kontraproduktiv.

Es ist daher die Aufgabe der vorliegenden Erfindung, ein Verfahren zur effektiveren und kostengünstigeren Entfernung von Mikroverunreinigungen aus vorgefiltertem, biologisch geklärtem Abwasser anzugeben.

Die Aufgabe wird erfindungsgemäß gelöst durch das Verfahren gemäß dem unabhängigen Patentanspruch 1.

Das erfindungsgemäße Verfahren zur Entfernung von organischen (Mikro-) Verunreinigungen aus vorgereinigtem Abwasser, insbesondere biologisch geklärtem, vorfiltriertem Abwasser, mittels Sauerstoff-Radikal-Spezies umfasst die folgenden Schritte:
Initiieren der Bildung verschiedener Sauerstoff-Radikal-Spezies durch Elektrolyse in dem Abwasser mittels einer mit dem Abwasser beaufschlagten, metallischen Elektrode; und
Abbauen von organischen Verbindungen der (Mikro-)Verunreinigungen durch Reaktionen mit den Sauerstoff-Radikal-Spezies;
wobei erfindungsgemäß zum Erzeugen der Sauerstoff-Radikal-Spezies eine Vor-Anreicherung des vorgereinigten Abwassers, insbesondere des geklärten, vorfiltrierten Abwassers mit reinem Sauerstoff erfolgt.

Das erfindungsgemäße Verfahren erzeugt also - begünstigt durch eine Voranreicherung von reinem Sauerstoff O₂ durch Einleiten von technischem Sauerstoff - auf elektrolytischem Wege eine Reihe unterschiedlicher, reaktiver Sauerstoff-Spezies, wodurch eine Kettenreaktion mit organischen Verbindungen ausgelöst wird, welche imstande ist, schneller als bei Verfahren nach dem Stand der Technik organische Verbindungen zu mineralisieren bzw. abzubauen. Hierbei werden nach verschiedenen Ausgestaltungen der Erfindung spezielle Elektroden unter besonderen Bedingungen bzw. Parametern eingesetzt.

Das erfindungsgemäße Verfahren verwendet beispielsweise einen Reaktor, der nicht nachgeschaltet, sondern konkret bzw. unmittelbar vor einer elektrolytischen Behandlung des Abwassers bzw. beim Einleiten von Abwasser in den Reaktor reinen, technischen Sauerstoff, O₂, insbesondere in einem unteren Teil des Reaktors einzuleiten gestattet, wodurch wesentlich bessere Ergebnisse erzielt werden.

Hydroxylradikale haben eine sehr kurze Halbwertszeit und reagieren mit vielen organischen Verbindungen - aber eben nicht mit allen - in der Gesamtbilanz zu 100% - und reagieren durch Hydrogen- Abstraktion, Elektron-Transfer, Addition und Radikal-Interaktion. Ein Kettenabbruch erfolgt dann, wenn Radikalfänger auftreten, Antioxidantien vorliegen und z.B. eine Radikal-Interaktion vorliegt. Die Reaktion unten zeigt ein Beispiel, wobei ein organisches Molekül ein Radikal bildet und erst durch die Anwesenheit von Sauerstoff diese Verbindung sehr schnell oxidiert:

RH + OH˙ → H₂O + R˙ (RH ist z.B. CH₃-CH₃)

R' + O₂ → RO˙₂ (Peroxide-Radikal)

Damit ist der Vorteil der vorgeschlagenen Methode belegt, da Sauerstoff als stabile Komponente im Überschuss in Reaktionen eingreifen kann, um organische Verbindungen, hier als Radikal dargestellt, zu oxidieren.

In einer Weiterbildung der Erfindung umfasst die Elektrode ein Gitter. Hierdurch wird die Oberfläche zur elektrolytischen Erzeugung von Sauerstoffradikalen vergrößert, und es lassen sich größere Stromdichten erzielen.

In einer Weiterbildung der Erfindung wird an der Elektrode eine Wechselspannung angelegt, wobei in einer Ausgestaltung dieser Weiterbildung der Erfindung beträgt die Amplitude der Wechselspannung nicht weniger als 100 V insbesondere nicht weniger als 200 V, wobei die Wechselspannung eine Frequenz von nicht weniger als 40 Hz aufweist.

In einer Weiterbildung der Erfindung beträgt die Stromdichte zwischen dem Abwasser und der Elektrode nicht weniger als 6 mA / cm², insbesondere nicht weniger als 10 mA / cm². Auf diese Weise wird eine vorteilhafte Menge an Sauerstoff-Radikalen bereitgestellt.

In einer Weiterbildung der Erfindung weist die Elektrode korrosionsbeständige Legierungen auf, die zumindest Eisen und/oder Kupfer aufweisen, insbesondere V2A-Stahl, Chrom-Nickel-Stähle, beispiels-weise gemäß DIN 1.4303, V4A - Stahl beispielsweise gemäß DIN 1.4429, oder A5-Stahl, beispielsweise gemäß DIN 1.4539, oder wobei die Elektrode martensitische Vergütungsstähle aufweist, welche V (Vanadium), Mn (Mangan), W (Wolfram) z.B. gemäß DIN 1.4501 enthalten, oder Stähle welche Ti (Titan), Nb (Niob), Ta (Tantal) und/oder Edelmetalle wie Pt (Platin), Pd (Palladium), Au (Gold) enthalten.

In einer Weiterbildung der Erfindung weist die Elektrode eine Legierung mit mindestens drei Übergangsmetallen auf.

In einer Weiterbildung der Erfindung bildet parallel zum elektrolytischen Prozess, die Dismutation von Superoxid, Hydrogen-Peroxid, welches wiederum bei Anwesenheit von Eisen-Ionen durch die Fenton-Reaktion zum Hydroxylradikal (OH•) gewandelt wird, wobei reaktive Sauerstoff-Spezies entstehen, die parallel zur Generierung von Radikalen durch die Elektrode, eine höhere Ausbeute an reaktiven Sauerstoff-Spezies gestattet.

In einer Weiterbildung der Erfindung beträgt der pH-Wert des Abwassers am Ort der Elektrode zwischen 4,0 und 4,4, insbesondere 4,2, oder zwischen 6 und 8, insbesondere 6,5 bis 7,5, beispielsweise 6,8 bis 7,2.

In einer Weiterbildung der Erfindung beträgt die Temperatur des Abwassers nicht mehr als 40°C, insbesondere nicht mehr als 30°C, beispielsweise nicht mehr als 25°C und bevorzugt etwa 20°C.

In einer Weiterbildung der Erfindung beträgt der Sauerstoffgehalt im Abwasser nach der Sauerstoffanreicherung nicht weniger als 6 mg/Liter, insbesondere nicht weniger als 8 mg/Liter.

In einer Weiterbildung der Erfindung beträgt der Sauerstoff-gehalt im Abwasser nach der Sauerstoffanreicherung nicht weniger als 10 mg/Liter, insbesondere nicht weniger als 20 mg/Liter.

Durch hohe Sauerstoffkonzentration mit Beginn der elektrolytischen Behandlung, kommt es zur Bildung einer ganzen Reihe unterschiedlicher reaktiver Sauerstoff-Spezies. Eine dieser Komponenten ist selbst molekularer Sauerstoff, der auch schon direkt einige zugängliche, organische Verbindungen oxidieren kann. Ein Vorteil gegenüber dem Stand der Technik ist, dass keine nachgeschaltete Sauerstoffanreicherung elektrolytisch durch DSA-Elektroden mit Iridium-Oxid als IrO₂/ Ta₂O₃, Pb/PbO₂, Ti/SnO₂ und anderen Elektroden erfolgen muss und damit entfallen kann, und dass auch keine Luft-Einblasung nach einer erster bzw. zweiten Elektrokoagulationsstufe erforderlich ist.

In einer Weiterbildung der Erfindung umfasst das Verfahren weiterhin eine dem Abbauen der organischen Spezies nachgeschaltete Filtrationsstufe, welche einen Sandfilter und einen Kohlefilter mit integrierter Membrane aufweist.

In einer Weiterbildung der Erfindung erfolgt die Sauerstoffanreicherung unmittelbar vor dem Initiieren der Bildung verschiedener Sauerstoff-Radikal-Spezies durch Elektrolyse.

In einer Weiterbildung der Erfindung erfolgt die Sauerstoffanreicherung mit reinem Sauerstoff nur vor dem Initiieren der Bildung verschiedener Sauerstoff-Radikal-Spezies durch Elektrolyse. Dies bedeutet insbesondere, dass nach der dem Initiieren der Bildung verschiedener Sauerstoff-Radikal-Spezies durch Elektrolyse keine weitere Anreicherung mit reinem Sauerstoff erfolgt.

Das erfindungsgemäße Verfahren ist nicht nur für die Entfernung von Mikroverunreinigungen aus biologisch geklärtem, vorfiltriertem Abwasser geeignet. Es kann auch für industrielle Abwässer eingesetzt werden, wenn vorher eine andere, beliebige Reinigungsstufe wie Flotation, chem. Fällung etc. stattfand. Auch in diesem Fall ist das Initiieren der Bildung verschiedener Sauerstoff-Radikal-Spezies durch Elektrolyse in dem Abwasser mittels einer mit dem Abwasser beaufschlagten, metallischen Elektrode; und Abbauen von organischen Verbindungen der (Mikro-)Verunreinigungen durch Reaktionen mit den Sauerstoff-Radikal-Spezies nach vorheriger Anreicherung des Abwassers mit reinem Sauerstoff wirksam, da der Gehalt an organischen Verunreinigungen zuvor erniedrigt wurde.

Das erfindungsgemäße Verfahren setzt also einen Reaktor ein, der nicht nachgeschaltet, sondern vor dem Reaktor bzw. beim Einleiten von Abwasser in den Reaktor durch reinen, technischen Sauerstoff insbesondere im unteren Teil, bei der Einleitung des Abwassers wesentlich bessere Ergebnisse erzielt - also konkret vor einer elektrolytischen Behandlung. Durch hohe Sauerstoffkonzentration mit Beginn der elektrolytischen Behandlung, kommt es zur Bildung einer ganzen Reihe unterschiedlicher reaktiver Sauerstoff-Spezies. Eine dieser Komponenten ist selbst molekularer Sauerstoff, der auch schon direkt einige zugängliche, organische Ver-bindungen oxidieren kann.

Der Anmelder möchte bei der Auslegung des Patents nicht durch eine Theorie gebunden sein, jedoch sollen die folgenden Erläuterungen zu den durch das Verfahren ermöglichten Mechanismen die Erfindung plausibilisieren.

Eine aus dem Stand der Technik bekannte Edelstahlelektrode allein ohne Sauerstoffeintrag generiert zu wenig Radikale, und diese mit einem Hauptanteil von Hydroxyl-Radikalen. Es fehlen dort in Quantität und Qualität andere reaktive Sauerstoff-Spezies. Ohne Sauerstoffeintrag kommt es insbesondere zu keiner Bildung einer Peroxid-Radikal-Verbindung mit einem organischen Molekül und somit auch nicht zu einer Kettenreaktion.

Die Gegenwart von Eisen-Ionen führt zu einer so genannten Fenton-Reaktion, die durch Rekombination von zwei Hydroxyl-Radikalen H₂O₂ entstehen lässt, welches wieder in Gegenwart von Fe-Ionen zur Bildung von weiteren Hydroxyl-Radikalen führt; es entsteht also eine Kettenreaktion.

Erstmals durch das erfindungsgemäße Verfahren mit dem vorgeschalteten Sauerstoffeintrag entsteht durch Reduktion von O₂ ein Superoxid in der Menge, welches zur Dismutation führt, mit Bildung von H₂O₂ und weiteren reaktiven Sauerstoff-Spezies.

Es können somit parallel drei Kettenreaktionen ablaufen:
**I.** mit organischen Molekülen,
**II.** mit reaktiven Sauerstoff-Spezies untereinander und
**III.** mit Eisen-Ionen in Art der Fenton-Reaktion.

Alle im Verlauf des erfindungsgemäßen Verfahrens generierten reaktiven Sauerstoff-Spezies reagieren auch mit organischen Molekülen und greifen dort auch an, wo allein Hydroxylradikale keine Reaktion eingehen können und führen so zeitlich zu einer weit besseren Abreicherung organischer Moleküle - auch als Summenparameter TOC bzw. CSB. Da reiner Sauerstoff im Überschuss vorliegt, ist eine viel bessere Reaktionskinetik erkennbar. Hydroxylradikale allein führen dagegen zu keinem vollständigen Abbau bzw. Mineralisierung der organischen Verbindungen. Hier sind reaktive Sauerstoff-Spezies ergänzend zu den Hydroxylradikalen die weit bessere Lösung.

Ein wichtiger Vorteil des neuen Verfahrens ist demnach die Bildung von reaktiven Sauerstoffspezies durch Einleiten von reinem Sauerstoff und die Auslösung einer Kettenreaktion, welche diverse Ionen-Spezies produziert und länger abläuft und somit wesentlich schneller einen Abbau von organischen Verbindungen ermöglicht. Ein Beispiel, das aus der Literatur entnommen wurde zeigt einen Reaktionsverlauf.

Reaktion von Hydroxylradikal in Gegenwart von Sauerstoff zur Zerlegung von Kohlenwasserstoffketten.:

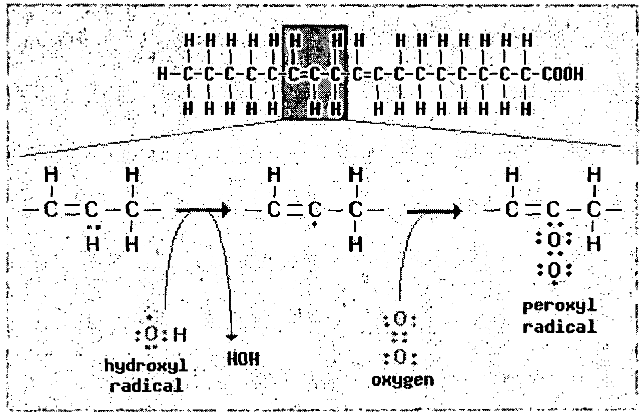

Eine weitere Darstellung aus Literatur entnommen, zeigt freie Radikale und reaktive Sauerstoffspezies, die auch hier bei der Entfernung von Mikroverunreinigungen eine wesentliche Rolle spielen und so auftreten (https://www.biotek.com.resources/white-papers/).

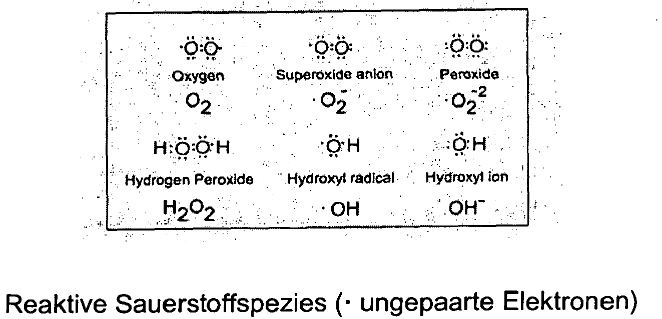

Es ist vorteilhaft, wenn die sechs unterschiedlichen, reaktiven Sauerstoffspezies gleichzeitig nebeneinander auftreten und parallel Reaktionen eingehen.

Weiter zeigt das nächste aus der Literatur (http//pubsrsc.org/en/content /chapterhtml/2016) entnommene Schaubild den durch das erfindungsgemäße Verfahren begünstigten Ablauf im Zusammenhang.

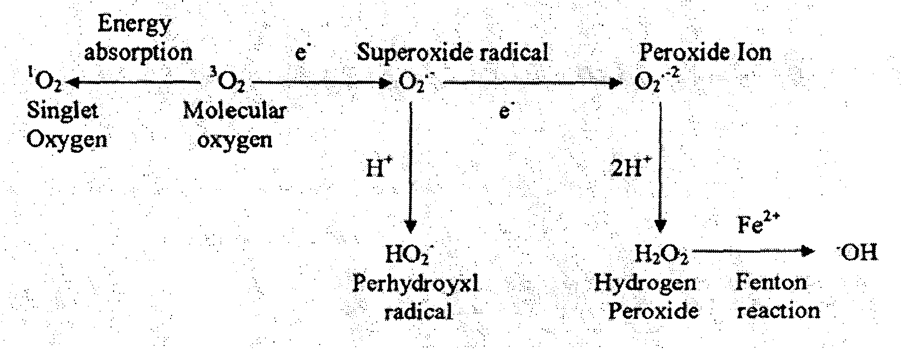

Die Reduktion von molekularem Sauerstoff (O₂) produziert das Superoxide (·O2⁻) der hier vor der elektrolytischen Reaktion eingeleitet wird, ist der Vorläufer für die meisten anderen reaktiven Sauerstoff-Spezies.
O₂+ e⁻ → ·O₂⁻, die Dismutation von Superoxid produziert Hydrogen-Peroxid,

2 H⁺ + ·O₂⁻ + ·O₂⁻ → H₂O2 + O₂

Da Sauerstoff kontinuierlich nach angereichert wird, kann das Hydrogen-Peroxid, welches bei der Fenton-Reaktion ein Hydroxylradikal (OH˙) bildet, neu entstehen. So bildet sich dieses sozusagen immer wieder neu in einer zweiten Kette parallel als Reaktion neben der Bildung vom Hydroxylradikal durch die Elektrode / Elektrolyse. Dieses führt insgesamt zu einer weitaus höheren Bilanz an Hydroxylradikalen und anderen reaktiven Sauerstoff-Spezies, Radikalen bzw. Übergangsverbindungen. Die Fenton-Reaktion läuft hier untergeordnet, sekundär, da keine hohe Konzentration von Eisen-Ionen vorliegt, welche bei dem Typ bzw. Zusammensetzung der Elektroden nicht auftreten kann. Die besondere Elektrode favorisiert die primäre Reduktion von Sauerstoff und weitere Bildung vom Superoxid.

Im Zusammenhang mit dem erfindungsgemäßen Verfahren sind die folgenden Elektrodenmaterialien favorisiert:
V2A - Legierungen bzw. Stahl - wie Chrom / Nickel Stähle (DIN 1.4303 - mit C, Si, Cr, Ni ,S) - mit geringer Korrosion bei der Elektrolyse, aber mit höherer Abgabe von Eisen-Ionen an die wässrige Matrix (das Abwasser) im Vergleich zu den nachfolgend genannten Legierungen.

V4A - Legierungen - wie Cr-Ni-Mo-Stähle (Chrom, Nickel, Molybdän) - DIN 1.4429 - bessere Korrosionsbeständigkeit bei der Elektrolyse mit kleinerer Abgabe von Eisen-Ionen an die Matrix. V4A enthalten die Elemente C, Cr. Ni, Mo, N.

V5A - oder A5 ist noch höher legiert und enthält Kupfer (Cu). Sehr geringe Abgabe von Fe und Cu an die wässrige Matrix (Meerwasserbeständigkeit) - DIN 1.4539. Beispiel: der Elemente sind Anteile von C, Cr, Ni, Mo, Cu in der Legierung.

Andere rostfreie "martensistische Vergütungsstähle enthalten V (Vanadium), Mn (Mangan), W (Wolfram) - DIN 1.4501. Z.B. DIN 1.4512 enthält als Zuschlag Ti (Titan) - auch Al (Aluminium) ist zu finden als DIN 1.4002. Weitere Zuschläge können sein: Nb (Niob) DIN 1.4509 oder Ta (Tantal). Auch Zuschläge der Fe-Legierung mit Edelmetallen (Pt, Pd, Au) sind erlaubt, die aber nicht als Massenware auf dem Markt angeboten werden.

Eine bevorzugte Ausbildung sind Stähle als Elektrodenmaterial mit Titan, Vanadium, Chrom, Mangan, Eisen, Kobalt und Kupfer. Bevorzugt sollten mindestens 3 Übergangsmetalle vorhanden sein, die bei Tests die besten Ergebnisse erbrachten.

Übergangsmetalle eignen sich als Katalysator. Sie besitzen eine ausgezeichnete Leitfähigkeit. Sie können sehr viele verschiedene Oxidationszustände einnehmen und sind gute Katalysatoren und bilden Komplexe. Außer Kupfer und Chrom haben alle eine Elektronenkonfiguration als d-Block-Elemente der 4. Periode - zwei Elektronen in ihrem äußeren s-Orbital, und einige Elemente mit unvollständigen 3d-Orbitalen. Das ist ungewöhnlich: niedrigere Orbitale werden normalerweise vor den äußeren Schalen aufgefüllt. Dieses führt zu dem besonderen Verhalten als Katalysator, welches ein Merkmal für die Auswahl der Zusammensetzung der Gitterelektrode ist. Übergangsmetalle sind gute homogene oder heterogene Katalysatoren, z. B. ist Eisen der Katalysator für das Haber-Bosch-Verfahren. Die bevorzugten genannten Elektrodenmaterialien zeigen bei diesem Verfahren eine gewisse katalytische Aktivität. Die wichtigsten Transitions-Metalle sind Titan, Vanadium, Chrom, Mangan, Eisen, Kobalt und Kupfer. Bei elektrolytischen Anwendungen ist die Eigenschaft der Reduktion von Sauerstoff in wässrigen Lösungen hervor zu heben - durch eine katalytische Fähigkeit. Dieses ist ein Merkmal bei der Darstellung des Superoxids (O2⁻).

Die erfindungsgemäße zur Verfügungsstellung von reinem, technischen Sauerstoff, beispielsweise aus einer handelsüblichen Gasflasche, vorgeschaltet zur Anreicherung des Abwassers vor der Elektrolyse mit Elektroden der genannten Art ist die richtige Lösung der Aufgabe der Erfindung. Nur durch diese Maßnahme ist eine Initiierung einer Kettenreaktion möglich, die diesen schnellen Abbau organischer Verbindungen erlaubt. Damit werden alle Nachteile der Offenlegungsschrift DE 10 2015 006 706 A1 überwunden. In diesem Zusammenhang ist noch anzumerken, dass beim gemäß dem Stand der Technik durchgeführten Einleiten von Luft ein Anteil von Kohlendioxid in die Matrix gelangt, der die Bildung von Karbonat- / Hydrogenkarbonat begünstigt, aber somit Radikalfänger erzeugt, welches nachteilig bei der Reaktion in der Ausbeute ist.

Da bei der Fenton-Reaktion Hydroxyl-Ionen (OH-) gebildet werden, wurde eine leichte Drift des pH-Wertes in Richtung alkalischer pH registriert im Versuchsaufbau im Zyklus gefahren, welcher allerdings gering ausfiel. Trotzdem ist dieses als signifikantes Merkmal für diese Reaktion zu werten, welches eine Gegenwart von Eisen-Ionen in der Metallelektrode bedingt. Weiter wurde in Versuchen festgestellt, dass bestimmte pH-Bedingungen eingehalten werden müssen, damit die Reaktion optimal abläuft und zwar bei den pH-Werten um 4,2 und um 7,4. Diese ist der Metall-Ionen-Spezies Abhängigkeit von Eisen-II zu Eisen-III-Ionen geschuldet, welches beim Pourbaix-Diagramm abzulesen ist. Weiter sieht man diese Effekte bei den Transitions-Metallen Kupfer und Eisen, welche durch den Haber-Weiss-Mechanismus bzw. der Fenton-Reaktion ablaufen. In der Regel ist ein pH-Wert im Neutralbereich, wie bei physiologischen Bedingungen herrscht, vorzuziehen.

Diese Versuche und Tests die hauptsächlich bei Raumtemperatur ausgeführt wurden, belegen, dass diefolgenden Parameter bevorzugt sind um eine besonders effektiven Abbau der organischen Verunreinigungen zu erzielen:
1 eine Sauerstoffanreicherung als Konzentration von 8-bis 40 mg / Liter
2 ein pH-Wert um 4,2 oder im Neutralbereich um 7,4
3 die Anwesenheit von Eisen-Ionen, d.h. Verwendung von Edelstahl oder eisenhaltigen bzw. kupferhaltigen Legierung
4 eine Temperatur vorzugsweise um 20°C -, die allerdings in Abwandelung bis 37°C ablaufen kann - allerdings nachteilig für Sauerstoffkonzentration.

Da bei früheren Versuchen auch Elektrodenplatten eingesetzt wurden, hat sich gezeigt, dass Gitterelektroden die beste Wahl sind, da hier eine höhere Stromdichte erreichbar ist und das Strömungsverhalten positiver ist, obwohl auch andere geometrische Formen von Elektroden arbeiten, aber eben mit schlechteren Wirkungsgrad bzw. Ausbeuten. Deshalb kommen in dem erfindungsgemäßen, vorgeschlagenen Verfahren, nur Gitterelektroden zum Einsatz. Die Stromdichte zur Erzeugung von reaktiven Sauerstoff-Spezies (RSP) und Radikalen liegt im Bereich von 10 bis 30 mA/cm². Höhere Stromdichten führen zu keiner Erhöhung der Reaktionskinetik bzw. zu einer Erhöhung der Ausbeute an RSP / Radikalen oder zur Erhöhung der Geschwindigkeit einer Kettenreaktion von Sauerstoffspezies mit organischen Molekülen.

Es hat sich in einem ersten Laborversuch gezeigt, dass sich hierbei die Reaktion wesentlich verbessert, welches sich in drastisch gekürzter Reaktionszeit als HRT (haydraulic retention time) widerspiegelt. Die Löslichkeit von Sauerstoff bei 25°C und einem Druck von 1 bar liegt bei 40 mg O₂ pro Kilogramm Wasser. In Luft mit einer gewöhnlichen Zusammensetzung von etwa 16% Sauerstoff, ist der Sauerstoffpartialdruck etwa 0,2 atm. Dies führt dazu, dass sich in Wasser in Berührung mit Luft (mit einem Luftdruck von 1 bar und folglich einem Sauerstoffpartialdruck von 0,2 bar) 40:0,2 = 8 mg O₂/kg lösen. Die Löslichkeit von Sauerstoff selbst, ist stark temperaturabhängig und nimmt bei höheren Temperaturen ab. Auch der Gehalt von gelösten Substanzen hat eine umgekehrte Wirkung auf die Löslichkeit von Sauerstoff - steigt dieser, nimmt sie ab. So hat Sauerstoff in beispielsweise Meerwasser, abhängig von der Temperatur, eine um etwa 1-3 mg/L geringere Löslichkeit als in Süßwasser. Hieraus folgt, da biologisch geklärtes Abwasser viele lösliche Stoffe enthält, dass eine Sauerstoffkonzentration als Anreicherung in diesem Medium zwischen 8 und 40 mg O₂ / kg bzw. Liter liegt, welches zu diesen sehr guten Ergebnissen einer Reduktion bzw. Entfernung von Mikroverunreinigungen führt.

Die Erfindung wird nun anhand eines in der Zeichnung dargestellten Ausführungsbeispiels näher erläutert. Es zeigt:

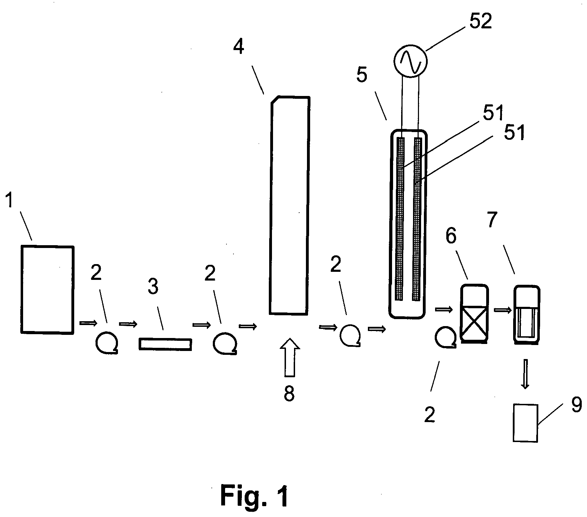

- Fig. 1:: eine schematische Darstellung einer Anlage zur Durchführung des erfindungsgemäßen Verfahrens.

Ein Ablauf eines Ausführungsbeispiels des erfindungsgemäßen Verfahrens wird nun anhand von Fig. 1 beschrieben. Um einen kontinuierlichen Betrieb zu realisieren, wird in einem Vorratstank 1 , der mit einer Temperierung und Rührwerk ausgerüstet ist, eine Anpassung des pH-Wertes, der Temperatur und ggf. der Leitfähigkeit vorgenommen. Mittels einer geeigneten Pumpe 2 wird das Wasser über eine Filtrationseinrichtung 3 gegeben, welche in der Regel eine Ausschluss-Größe von 1000 - 2000 Mikron hat. Das Filtrat wird nun in eine Vorrichtung 4 für die Sauerstoffanreicherung 8 gepumpt. Diese Vorrichtung 4 besteht im einfachsten Fall aus einem hohen Rohr mit im Boden befindlichen porösen Kunststoff-Tellern oder einer weiter entwickelten Vorrichtung, aus statischem Mischer und Reaktor der einen Sauerstoffeintrag bis zur Sättigungsgrenze erlaubt. Als Beispiel gilt ein Apparat der Firma AirLiquide - Injector-Bicone. Nun erfolgt eine Einleitung in einen Reaktor 5, der am Boden eine am Boden verschraubbare Zuleitung aufweist. Im Reaktor 5 sind zwei metallische Gitterelektroden 51 angeordnet, die an eine Wechselspannungsquelle 52 angeschlossen sind, um über Elektrolyse die Bildung von reaktiven Sauerstoffspezies einzuleiten, welche den oxidativen Abbau der organischen Verunreinigung bewirken. Die Strömungsgeschwindigkeit wird durch ein Ventil reguliert und im Fluss gemessen, um eine Abstimmung zur HRT (hydraulic retention time) zu ermöglichen. Es können zudem mehrere Reaktoren, die aus Kunststoff - bevorzugt aus PVC - bestehen, direkt hintereinandergeschaltet werden, um eine Abstimmung zur HRT zu erhalten. Nach Durchlauf durch den Reaktor 5, der als Oxidationsstufe fungiert, wird das Wasser mittels einer Pumpe 2 über ein Sandfilter 6 geleitet mit anschließender, Filtration über eine Kohlefilterstufe 7 mit gekörnter, gepresster Aktivkohle, die als Container im Austausch erhältlich ist. Das klare, farblose Wasser wird im letzten Schritt durch einen UV-Detektor als Rohr-Küvette geleitet, um im Fluss bei einer festen Wellenlänge von 254 nm die Extinktion zu messen.

Als Sauerstoffquelle 8 ist eine handelsübliche Sauerstoff-Flasche mit regelbarem Ventil und Manometer an einen Tank/Container angeschlossen, um Sauerstoff in die Wasserphase einzuleiten, wobei die Menge an Sauerstoff sich nach dem Volumen und der Temperatur richtet. Ergänzend oder alternativ dazu kann die Sauerstoffquelle an einem Einlassstück bei der Zuleitung vor dem Reaktor 5 oder in Fuß bzw. Unterteil des Reaktors 5 eine Sauerstoffanreicherung stattfindet. Es kann ein Sauerstoffsensor integriert sein, um den Gehalt zu messen. Die Gitterelektroden 51 weisen vorzugsweise Edelstahl bzw. Transitions-Metallen auf aber auch Legierungen, die vorzugsweise neben Eisen auch / oder Kupfer und Titan, Vanadium, Chrom, Mangan, Eisen, Kobalt beinhalten, sowie Zuschläge von Pt, Au, Pd, Nb und Ta sind geeignet. Bei diesem Verfahren tritt keine Elektrokoagulation auf und es entsteht kein Niederschlag von Metallhydroxid, der abgeführt werden muss.

### Beispiel

Bei einem Labortest wurden 2 Liter eines biologisch, geklärten Stadtabwassers eingesetzt mit folgenden Paramatern:
Leitfähigkeit: 1/Ω = 2.43 mS/ cm bei 21°C
COD/CSB = 30-60 mg/l
TOC = 17 mg C /l
DOC = 10 mg C/l
TSS = 14 mg/l
P_{ges} = 0,02 mg/l
N_{ges} = 62 mg/l
pH = 7,52
Temperatur: ca. 20°C
Aussehen: mit leichtem Gelb- / Braunton
Geruch: wenig, bis kaum wahrnehmbar, indifferent
Bakteriengehalt als Gesamtkeimzahl (GKZ): etwa 10⁴ Keime /ml

Elektrode: Gitter mit 200 cm² Fläche, Material: V4A, Abstandshalter aus PE - M5 Muttern und Schrauben, Elektrodenabstand 3 mm.

Gemessene Werte: 150 V bei 0,9 A bei 50/60 Hz - als Wechselstrom. Durchschnittliche Stromdichte 10 bis 30 mA/cm²
pH-Justierung zum Neutralpunkt; Sauerstoff-Konzentration etwa 8 mg / Liter bei ca. 20°C.

Das Abwasser wurde vorfiltriert, um von Partikeln zu befreien. Das Filtrat wurde in ein Becherglas gegeben und mit einem porösen Stein aus Aquarium-Zubehör als Perlvorrichtung mit Sauerstoff angereichert. Das Abwasservolumen wurde aus dem Becherglas heraus im Kreislauf mit einem Durchfluss von 15 Litern pro Stunde durch die Apparatur bzw. Reaktor gefördert und im Minuten-Intervall Proben entnommen. Es zeigte sich, dass bereits nach 4-5 Minuten eine über achtzigprozentige (80%) Reduktion der Extinktion, die bei einer Festwellenlänge von 254 nm gemessen wurde erreicht wird. Dieses entspricht einer Reduktion von Mikroverunreinigungen von gut 95%. Damit ist das Ergebnis weitaus besser als bei anderen Verfahren.

### Bezugszeichenliste

- 1: Vorratscontainer mit Rührwerk zur Temperierung, pH-Justierung, Einstellung der Leitfähigkeit
- 2: Pumpen
- 3: Filtrationseinheit
- 4: Sauerstoff- Anreicherung
- 5: Elektrolyse-Reaktor
- 6: Sandfilter
- 7: Aktivkohlefilter (gekörnt) mit integrierter Membran
- 8: Sauerstoffzufuhr - extern durch Flaschen oder Generator
- 9: UV-Detektor

## Patentansprüche

1. Verfahren zur Entfernung von organischen (Mikro-) Verunreinigungen aus vorgereinigtem Abwasser, insbesondere biologisch geklärtem, vorfiltriertem Abwasser, mittels Sauerstoff-Radikal-Spezies, wobei das Verfahren aufweist:
Initiieren der Bildung verschiedener Sauerstoff-Radikal-Spezies durch Elektrolyse in dem Abwasser mittels einer mit dem Abwasser beaufschlagten, metallischen Elektrode; und
Abbauen von organischen Verbindungen der (Mikro-)Verunreinigungen durch Reaktionen mit den Sauerstoff-Radikal-Spezies;
**dadurch gekennzeichnet,**
**dass** zum Erzeugen der Sauerstoff-Radikal-Spezies eine Vor-Anreicherung des geklärten, vorfiltrierten Abwassers mit reinem Sauerstoff erfolgt.

2. Verfahren nach Anspruch 1, wobei die Elektrode eine Legierung mit mindestens drei Übergangsmetallen aufweist.

3. Verfahren nach Anspruch 1 oder 2, wobei die Elektrode ein Gitter umfasst.

4. Verfahren nach Anspruch 1, 2 oder 3, wobei an der Elektrode eine Wechselspannung angelegt wird.

5. Verfahren nach Anspruch 4, wobei die Amplitude der Wechsel-spannung nicht weniger als 100 V insbesondere nicht weniger als 200 V beträgt, und wobei die Wechselspannung eine Frequenz von nicht weniger als 40 Hz aufweist.

6. Verfahren nach Anspruch 4 oder 5, wobei die Stromdichte zwischen dem Abwasser und der Elektrode nicht weniger als 6 mA / cm², insbesondere nicht weniger als 10 mA / cm² beträgt.

7. Verfahren nach einem der vorhergehenden Ansprüche, wobei die Elektrode korrosionsbeständige Legierungen aufweist die zumindest Eisen und/oder Kupfer aufweisen, insbesondere V2A-Stahl, Chrom-Nickel-Stähle, beispiels-weise gemäß DIN 1.4303, V4A - Stahl beispielsweise gemäß DIN 1.4429, oder A5-Stahl, beispielsweise gemäß DIN 1.4539, oder wobei die Elektrode martensitische Vergütungsstähle aufweist, welche V (Vanadium), Mn (Mangan), W (Wolfram) z.B. gemäß DIN 1.4501 enthalten, oder Stähle welche Ti (Titan), Nb (Niob), Ta (Tantal) und/oder Edelmetalle wie Pt (Platin), Pd (Palladium), Au (Gold) enthalten.

8. Verfahren nach einem der vorhergehenden Ansprüche, wobei parallel zum elektrolytischen Prozess die Dismutation von Superoxid, Hydrogen-Peroxid bildet, welches wiederum bei Anwesenheit von Eisen-Ionen durch die Fenton-Reaktion zum Hydroxylradikal (OH•) gewandelt wird, und reaktive Sauerstoff-Spezies entstehen, die parallel zur Generierung von Radikalen durch die Elektrode, eine höhere Ausbeute an reaktiven Sauerstoff-Spezies gestattet.

9. Verfahren nach einem der vorhergehenden Ansprüche, wobei der pH-Wert des Abwassers am Ort der Elektrode zwischen 4,0 und 4,4, insbesondere 4,2, oder zwischen 6 und 8, insbesondere 6,5 bis 7,5, beispielsweise 6,8 bis 7,2 beträgt.

10. Verfahren nach einem der vorhergehenden Ansprüche, wobei die Temperatur des Abwassers nicht mehr als 40°C, insbesondere nicht mehr als 30°C, beispielsweise nicht mehr als 25°C und bevorzugt etwa 20°C beträgt.

11. Verfahren nach einem der vorhergehenden Ansprüche, wobei der Sauerstoff-gehalt im Abwasser nach der Sauerstoffanreicherung nicht weniger als 6 mg/Liter, beispielsweise nicht weniger als 8 mg/Liter, insbesondere nicht weniger als 10 mg/Liter und weiter nicht weniger als 20 mg/Liter und ggf. bis 40 mg/Liter beträgt,

12. Verfahren nach einem der vorhergehenden Ansprüche, wobei die Sauerstoffanreicherung unmittelbar vor dem Initiieren der Bildung verschiedener Sauerstoff-Radikal-Spezies durch Elektrolyse erfolgt.

13. Verfahren nach einem der vorhergehenden Ansprüche, wobei die Sauerstoffanreicherung mit reinem Sauerstoff nur vor dem Initiieren der Bildung verschiedener Sauerstoff-Radikal-Spezies durch Elektrolyse erfolgt.

14. Verfahren nach einem der Ansprüche weiterhin umfassend, eine dem Abbauen der organischen Spezies nachgeschaltete Filtrationsstufe, welche einen Sandfilter und einen Kohlefilter mit integrierter Membrane aufweist.
